(19) **Europäisches Patentamt**

**European Patent Office**

**Office européen des brevets**

(11) **EP 0 781 620 B1**

(12) **EUROPÄISCHE PATENTSCHRIFT**

(45) Veröffentlichungstag und Bekanntmachung des Hinweises auf die Patenterteilung:
**19.04.2000  Patentblatt 2000/16**

(51) Int Cl.7: **B23H 7/06**, B23H 7/04

(21) Anmeldenummer: **96119103.8**

(22) Anmeldetag: **28.11.1996**

(54) **Verfahren und Vorrichtung zum Drahterodieren**

Method and apparatus for wire electric discharge machining

Procédé et dispositif d'usinage par étincelage

(84) Benannte Vertragsstaaten:
**CH DE FR GB IT LI**

(30) Priorität: **19.12.1995  DE 19547480**

(43) Veröffentlichungstag der Anmeldung:
**02.07.1997  Patentblatt 1997/27**

(73) Patentinhaber: **AGIE SA**
**6616 Losone (CH)**

(72) Erfinder:
• **Derighetti, René, Dr.**
**6616 Losone (CH)**

• **Dresti, Silvano, Dr.**
**28052 Canobbio (IT)**

(74) Vertreter: **Turi, Michael, Dipl.-Phys. et al**
**Samson & Partner**
**Widenmayerstrasse 5**
**80538 München (DE)**

(56) Entgegenhaltungen:
**EP-A- 0 581 968**   **CH-A- 657 553**
**DE-A- 2 826 270**   **DE-A- 2 921 356**
**US-A- 4 518 842**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Drahterodieren unter Berücksichtigung der durch den Bearbeitungsvorgang verursachten Auslenkung eines Erodierdrahtes sowie einen Regelkreis für eine Drahterosionsvorrichtung zur Durchführung eines derartigen Verfahrens.

Beim Drahterodieren wird, ausgehend von einer Startbohrung oder einer Referenzfläche, mit einer ersten Elektrode - dem Erodierdraht - eine Kontur in eine bzw. aus einer zweiten Elektrode - dem Werkstück - geschnitten. Dabei wird der Erodierdraht von einer Vorratsrolle laufend abgezogen, über eine oberhalb des Werkstücks angeordnete Drahtführung zur Bearbeitungszone hingeführt, durch die Bearbeitungszone hindurch und über eine unterhalb des Werkstückes angeordnete Drahtführung abgeführt.

Ein Problem besonderer Art besteht beim Drahterodieren darin, daß während des Erosionsvorgangs mechanische und elektrische Kräfte eine dauernde Auslenkung und bauchartige Krümmung des biegeempfindlichen Erodierdrahtes aus seiner Ruhelage bewirken. Diese Drahtauslenkung, die je nach den spezifischen Erosionsbedingungen in oder gegen die Bearbeitungs- bzw. Vorschubrichtung gerichtet ist, verursacht vor allem bei gekrümmten Schnittkonturen unerwünschte Abweichungen von der programmierten Sollbahn. Bei den meisten bekannten Drahterosionsvorrichtungen wird die durch den Bearbeitungsvorgang verursachte Drahtauslenkung nicht gemessen und auch nicht durch eine Regelung unter Kontrolle gehalten. Lediglich bei der Programmierung der Schnittkonturen werden die Geometriewerte um empirisch gewonnene Werte korrigiert, welche je nach Bearbeitungsart, z.B. Voll- oder Nachschnitt, den durch die Drahtauslenkung verursachten Konturfehler berücksichtigen. Da die Wiederholung dieser empirisch gewonnen Korrekturparameter nicht gesichert ist, ist es immer wieder notwendig, die Korrekturwerte neu anzupassen; auch können Konturfehler, die bei neuen Schnittbedingungen auftreten, - wenn überhaupt - erst nach langwierigen Versuchen ermittelt werden.

Die US-A-4,518,842 befaßt sich zwar mit einem Verfahren zum Drahterodieren unter Berücksichtigung der durch den Bearbeitungsvorgang verursachten Drahtauslenkung. Vorgeschlagen wird dabei eine sogenannte Eckenstrategie beim Drahtschneiden eines Werkstücks. Um die Bearbeitungsgenauigkeit zu verbessern, werden im Bereich von scharfen Ecken und Kanten die Erosionsenergie, die Drahtspannung und/oder Vorschubgeschwindigkeit, also Erosionsparameter, welche eine Querkraft auf den Erodierdraht ausüben, so verändert, daß die Drahtauslenkung in den Ecken kleiner oder gleich einem vorgegebenen Toleranzwert ist. Innerhalb des Toleranzbereiches werden Schwankungen der Drahtauslenkung und die hiermit bedingten Konturfehler akzeptiert. Des weiteren wird die Drahtauslenkung während der Bearbeitung nicht kontinuierlich gemessen, sondern es wird der aktuelle Entladungsstrom gemessen und die entsprechenden dazugehörigen Werte der Drahtauslenkung, die offenbar vorher experimentell ermittelt wurden, aus einem Speicher aufgerufen. Alles zusammen führt dazu, daß die Bearbeitungsgenauigkeit nicht optimal ist.

Die CH-A-657 553 beschäftigt sich auch mit dem Problem der Drahtauslenkung beim funkenerosiven Schneiden und dem damit einhergehenden Fehler der resultierenden Bahnkontur, insbesondere in den Ecken der Schnittkontur. Zur Lösung dieses Problems wird vorgeschlagen, die Drahtauslenkung als solche durch Verringerung der Vorschubgeschwindigkeit vollständig zu beseitigen oder die Drahtauslenkung bei der Programmierung der Steuerung zu berücksichtigen, wobei im letzteren Fall etwaige Schwankungen der Drahtauslenkung wiederum zu einem Fehler der resultierenden Bahn führen würden. Offenbart ist auch eine Vorrichtung und ein Verfahren zum Bestimmen der Drahtauslenkung, ohne z.B. optische Meßgeräte hierfür verwenden zu müssen.

Ein Verfahren der eingangs genannten Art ist auch aus der DE-PS 28 26 270 C2 bekannt. Dabei wird die Auslenkung des Erodierdrahtes bezüglich seiner Ruhelage laufend vermessen und mit Hilfe dieser Auslenkinformation die Bahn der Drahtführungen derart korrigiert, daß die vom Erodierdraht durchlaufene Bahn der Sollbahn entspricht. Diese Bahnkorrektur erfolgt mit Hilfe eines gegenüber der Vorschubregelung langsamen Regelkreises. Trotz optimaler Auslegung dieses Regelkreises zeigen die erodierten Oberflächen dennoch unerwünschte Unregelmäßigkeiten. Diese Unregelmäßikeiten treten besonders bei komplexer Schnittgeometrie auf.

Die Erfindung zielt darauf ab, die Präzision beim Drahterodieren noch effizienter zu verbessen.

Die Erfindung erreicht dieses Ziel durch die Gegenstände der Ansprüche 1 und 11. Vorteilhafte Ausgestaltungen der Erfindung sind in den abhängigen Ansprüchen 2 bis 10 sowie 12 und 13 beschrieben.

Danach schafft die Erfindung ein Verfahren zum Drahterodieren unter Brücksichtigung der durch den Bearbeitungsvorgang verursachten Auslenkung eines Erodierdrahtes, wobei wenigstens ein Erosionsparameter, z.B. Impulsfrequenz, Vorschubgeschwindigkeit, Impulsstrom, Impulsdauer und/oder Spülparameter, der eine die Drahtauslenkung beeinflussende Querkraft auf den Erodierdraht verursacht, zur Korrektur der Drahtauslenkung verändert wird. Dabei wird die Drahtauslenkung kontinuierlich gemessen und in Abhängigkeit des wenigstens einen Erosionsparameters so geregelt, daß die Drahtauslenkung des Erodierdrahtes während der Bearbeitung konstant gehalten wird. Ein hierfür geeigneter Regelkreis für eine Drahterosionsvorrichtung umfaßt: wenigstens einen Drahtlagesensor zur kontinuierlichen Erfassung der Drahtauslenkung des Erodierdrahtes; und einen Regler zum Verändern wenigstens eines Erosionsparameters, z.B. Impulsfrequenz, Vorschubgeschwindigkeit, Impulsstrom, Impulsdauer und/oder Spülparameter, wodurch eine die Drahtauslenkung beeinflussende Querkraft auf den Erodierdraht ausgeübt wird, derart, daß die Drahtauslenkung während der Bearbeitung konstant gehalten wird.

Eine Idee der Erfindung besteht darin, die unvermeidbare Drahtauslenkung, die von einer Vielzahl von - teils bekannten, teils nicht vollends verstandenen - Faktoren abhängt, durch eine bestimmte Regelstrategie als Unsicherheitsfaktor bei der Draherosion auszuschalten: Während der Berarbeitung wird die Drahtauslenkung tangential und ggf. senkrecht zur Schnittrichtung ständig überwacht, mit einem vorgegebenen, festen Auslenkungssollwerten tangential und ggf. senkrecht zur Vorschubrichtung verglichen. Im Falle einer Abweichung von der Sollauslenkungwird auf die für die Drahtauslenkung maßgebenden Erosionsparameter derart eingewirkt, daß die Drahtauslenkung einen konstanten Wert beibehält. Auf diese Weise werden etwaige Schwankungen der Drahtauslenkung, hervorgerufen durch momentane Änderungen der Erosionsbedingungen, z.B. durch Materialinhomogenität, durch veränderliche mechanische Stabilität des Erodierdrahtes, etc., und die damit einhergehende Verschlechterung der Schnittqualität, ausgeschaltet.

Die Drahtauslenkung kann nunmehr als fester Parameter bei der Einrichtung einer Draherosionsmaschine einbezogen werden. Vorzugsweise wird dabei die programmierte Schnittgeometrie um den durch die Drahtauslenkung induzierten Schleppfehler derart korrigiert, daß der Erodierdraht die vorgegebene Sollkontur durchläuft. In Fortbildung des aus der US-A 4,518,842 bekannten Verfahrens wird nunmehr auch die Drahtauslenkung unter Kontrolle gehalten. Die hierdurch erreichte Stabilität der Drahtauslenkung ist die ideale Voraussetzung für die Korrektur der programmierten Schnittkontur, wie sie z.B. bei der sog. DLS (Pilot)-Korrektur der Firma AGIE durchgeführt wird. Erst die Kombination von Korrektur der programmierten Schnittkontur unter Berücksichtigung der durch den Bearbeitungsvorgang verursachten Drahtauslenkung einerseits mit der hier vorgeschlagenen Regelstrategie bringt ein optimales Ergebnis hinsichtlich Genauigkeit und Reproduzierbarkeit der Schnittgeometrie bei beliebigen Erosionsbedingungen.

Als Stellgrößen sind grundsätzlich alle Erosionsparameter geeignet, von denen die elektrischen und mechanischen Kräfte abhängen, die während der Bearbeitung auf den Erodierdraht einwirken und die Drahtauslenkung verursachen, z.B. Geschwindigkeit und Richtung der Vorschubregelgung, Impulsstrom, Impulsdauer und Impulspausen der Bearbeitungsimpulse sowie Spüldruck und Spülmenge der Dielektrikumspülung. Als besonders günstige Stellgröße hat sich die Impulsfrequenz der Bearbeitungsimpulse und die Vorschubgeschwindigkeit des Erodierdrahtes tangential zur Schnittrichtung erwiesen. Diese Erosionsparameter können zur Beeinflussung der Drahtauslenkung des Erodierdrahtes herangezogen werden, ohne dabei andere Faktoren, z.B. Oberflächenrauheit durch chemische Ablagerungen, Arbeitsspaltabmessungen etc., in unerwünschter Weise zu beeinflussen.

Vorzugsweise werden die Impulsfrequenz und die Vorschubgeschwindigkeit des Erodierdrahtes wie folgt beeinflußt:

- Bei vorgegebener Schnittgeschwindigkeit wird die Drahtauslenkung durch Änderung der Impulsfrequenz der Bearbeitungsimpulse konstant gehalten (sog. isoenergetische Impulse);
- bei vorgegebener Impulsfrequenz wird die Drahtauslenkung durch Änderung der Vorschubgeschwindigkeit des Erodierdrahtes konstant gehalten, und
- bei vorgegebener Impulsfrequenz (bzw. vorgegebener Schnittgeschwindigkeit) wird die Drahtauslenkung zunächst durch Beeinflussung der Vorschubgeschwindigkeit und ggf. in einem weiteren Regelzyklus durch Beeinflussung der Impulsfrequenz (bzw. der Schnittgeschwindigkeit) konstant gehalten.

Die Geschwindigkeit des Regelkreises, mit welcher einer etwaigen Abweichung der Drahtauslenkung von der Sollabweichung entgegengewirkt wird, ist selbstverständlich der Geschwindigkeit einer tatsächlichen Lageänderung des Erodierdrahtes anzupassen. Gleiches gilt für die Geschwindigkeit der Drahtführungsantriebe, für den Fall, daß die Vorschubgeschwindigkeit entsprechend verändert wird, sowie für die Schnelligkeit einer Generatorsteuerung, für den Fall, daß die Impulsfrequenz der Bearbeitungsimpule entsprechend angepaßt wird.

Während des Erosionsvorganges wirken auf den Erodierdraht sowohl mechanische Kräfte, z.B. mechanische Rückstellkräfte aufgrund der auf den Erodierdraht aufgebrachten Zugspannung, Spülungskräfte sowie die durch den Erosionsprozeß hervorgerufenen Erosionskräfte (sog. Erosionsdruck), als auch elektromagnetische und elektrostatische Kräfte zwischen dem Erodierdraht und dem Werkstück. Zwar ist bekannt, daß die mechanische Trägheit und mechanische Zugspannung des Erodierdrahtes den elektrischen Kräften, dem Erosionsdruck und den Spülungskräften entgegenwirkt. Betrag und Richtung der einzelnen Kräfte hängt jedoch von den spezifischen Erosionsbedinungen, insbesondere der Schnittart, z.B. ob ein kurvenförmiger oder geradliniger Voll- oder Nachschnitt stattfindet, und vom Abstand zwischen dem Erodierdraht und dem Werkstück ab. Ihr jeweiliger Einfluß auf die Lage des Erodierdrahtes ist schwierig festzustellen. Jedenfalls führen diese Kräfte in ihrer Summe zu einer Auslenkung des Erodierdrahtes aus seiner Ruhelage. Die hier vorgeschlagene Regelstrategie berücksichtigt all diese Kräfte in ihrer integralen Wirkung, indem nicht die Drahtauslenkung als solche behoben, sondern ihr Wert durch Beeinflussung vorzugsweise der Impulsfrequenz und/oder der Vorschubgeschwindigkeit auf einem konstanten Wert gehalten wird. Auf diese Weise wird die beim Drahterodieren unvermeidbare Drahtauslenkung eine ohne weiteres beherrschbare Technologiegröße. Etwaige Ungenauigkeiten der Schnittkontur, die bisher von Schwankungen der Drahtauslenkung herrührten, sind dadurch ausgeschlossen.

Die vorgeschlagene Regelgröße, nämlich die Auslenkung des Erodierdrahtes, ist auch ein Indikator für Änderungen der Erosionsbedingungen während des Bearbeitungsvorganges. Änderungen der Drahtauslenkung lassen umgekehrt Rückschlüsse auf Energieänderungen in der Bearbeitungszone zu, z.B. Änderung der mechanischen Energie des Erodierdrahtes, der elektrischen Energie des durch Erodierdraht und Werkstück gebildeten Kondensators, sowie der magnetischen Energie der durch den Erodierdraht gebildeten Induktivität. Vorteilhaft wird daher die hier vorgeschlagene Überwachung der Drahtauslenkung auch zur Überwachung des Erosionsprozesses insgesamt genutzt. Etwaige Abweichungen von der vorgegebenen Sollauslenkung lassen Rückschlüsse zu, z.B. auf momentane Verunreinigungen im Arbeitsspalt, auf die Kurzschluß- und Drahtrißgefahr, auf die Spülungsverhältnisse oder auf Mängel der Drahtführung. Dabei werden beim Unterschreiten der gemessenen Drahtauslenkung unterhalb eines vorgegebenen Mindestwertes automatisch Maßnahmen zur Verhinderung von Prozeßentartungen eingeleitet. Solche Maßnahmen können sein:

- Aufrechterhaltung des Erosionsvorganges durch Verringerung der Impulsfrequenz der Bearbeitungsimpulse sowie der Schnittgeschwindigkeit bei latenter Kurzschlußneigung;
- Verringerung des Bearbeitungsstromes sowie der Schnittgeschwindigkeit und ggf. Umkehrung des Drahtvorschubes bei Kurzschlüssen ohne Drahtriß;
- abrupte Unterbrechung des Bearbeitungsvorganges und ggf. Aktivierung einer automatischen Drahteinfädelung bei Kurzschlüssen mit Drahtbruch.

Zusätzlich kann die erfindungsgemäße Regelung der Drahtauslenkung auch zur Überwachung der Geometrie des Werkstückes herangezogen werden. Im Unterschied zu bekannten Verfahren, welche lediglich elektrische Größen, wie die Zündverzögerung, die Zündspannung, den Spannungseinbruch, den mittleren Bearbeitungsstrom etc., auf einen konstanten Wert regeln, wird hier eine Größe geregelt, die vom Abstand zwischen Erodierdraht und Werkstück abhängt. Die zuvor genannten elektrischen Größen sind in diesem Sinne "richtungsunabhängig" und können bereits deswegen keine Information über die Geometrie des Werkstückes liefern. Insbesondere beim Schneiden von inneren und äußeren Ecken bei Vollschnitten oder beim Nachschneiden von Profilen mit Abweichungen von der Sollgeometrie des Werkstückes kann nur anhand einer richtungs- und betragsmäßigen Auswertung der Drahtauslenkung eine hohe Schnittgenauigkeit erzielt werden.

Je nach Schnittart und/oder Bearbeitungsstrom werden die Erosionsparameter vorzugsweise derart geregelt, daß die Drahtauslenkung - sowohl vertikal bzw. tangential, als auch senkrecht zur Schnittbahn - einen vorgegebenen Wert hat. Bei der Ermittlung der Stellgrößen zur Beeinflussung der Drahtauslenkung kann eine tangentiale und senkrechte Abweichung von der Sollauslenkung unterschiedlich gewichtet und demnach die tangentiale und die senkrechte Komponente der Drahtauslenkung verschieden sein.

Bei besonderen Erosionsbedingungen wird für die Sollauslenkung der Wert "Null" gewählt, d.h. der Erodierdraht bleibt wärend der Bearbeitung in seiner Ruhelage. Dies ist dann der Fall, wenn sich die mechanischen Rückstellkräfte einerseits und die elektrischen Kräften, der Erosionsdruck und die Spülungskräfte andererseits gerade gegenseitig aufheben. Meist ist diese Bedingung nicht erfüllt, so daß die Richtung der Sollauslenkung grundsätzlich wie folgt gewählt wird: gegen die Schnittrichtung bei geradem Vollschnitt; mit einer tangentialen und einer senkrechten Komponente relativ zur Schnittrichtung bei kurvenförmigem Vollschnitt; oder quer zur Schnittrichtung bei Feinschnitten. Der Betrag der Sollauslenkung wird je nach Drahtdurchmesser, Drahtsorte und der gewünschten Erosionsleistung ausgewählt.

Bei Nachschnitten muß grundsätzlich zwischen Nachschnitten zur Korrektur von Geometriefehlern (Korrekturschnitte) und Nachschnitten zur Verbesserung der Oberflächenrauheit (Feinschnitte) unterschieden werden. Bei Korrekturschnitten sind ebenso wie bei Vollschnitten die Erosionskräfte für die Richtung der Drahtauslenkung maßgebend, so daß eine Drahtauslenkung quer zur Schnittrichtung gewählt wird. Etwaige Schwankungen der lateralen Drahtauslenkung hängen bei Korrekturschnitten vor allem von der Änderung der Richtung und der Amplitude der auftretenden Erosionskräfte aufgrund des mehr oder weniger vorhandenen, nachzuschneidenden Materials ab. Um ein Konturprofil sicher zu korrigieren, genügt es, die laterale und tangentiale Auslenkung des Erodierdrahtes konstant zu halten. Dies wird vorzugsweise durch Anpassung der Vorschubgeschwindigkeit erreicht, indem bei mehr zunehmenden Material die Vorschubgeschwindigkeit verringert, und umgekehrt bei weniger abzutragendem Material erhöht wird. In jedem Fall bleibt die Drahtkrümmung konstant und damit die Nachschnittgenauigkeit erhalten. Die maximale Nachschnittgeschwindigkeit wird durch den vorgegebenen Sollwert der Drahtauslenkung bestimmt.

Bei Feinschnitten überwiegen dagegen die elektrostatischen Kräfte, welche den Erodierdraht in Richtung zum Werkstück hin auslenken. Für diesen Fall wird daher die maximal zulässige laterale Drahtauslenkung quer zur Schnittrichtung gewählt.

Der vorgeschlagene Regelkreis eignet sich vorzugsweise auch dazu, einen Eich- bzw. Referenzwert für die Drahtauslenkung zu bestimmen: Dabei wird die Ruhelage des Erodierdrahtes vor Beginn der Bearbeitung mit Hilfe des Drahtlagesenors automatisch bestimmt und als Eichwert in einem Steuerungsrechner der Drahterosionsvorrichtung gespeichert.

Bei einer beachtlichen Erhöhung der Impulsfrequenz der Bearbeitungsimpulse kann der Arbeitsspalt seine Abmessungen verändern, was wiederum Auswirkungen auf das Erosionsergebnis hat. Diesem Effekt wird vorzugsweise dadurch entgegengewirkt, daß eine etwaige Veränderung des Arbeitsspaltes durch Messung des Arbeitsspaltwiderstandes überwacht und ihr ggf. durch Erhöhung des Spüldruckes entgegengewirkt wird, um den Erosionsgap zu stabilisieren. Vorzugsweise wird der Bearbeitungsvorgang zusätzlich mit Hilfe einer gegenüber der Regelung der Drahtauslenkung schnelleren inneren Regelschleife anhand der Zündverzögerung, der mittleren Bearbeitungsspannung, der Anzahl der Leerlaufimpulse und/oder der Kurzschlußbildung überwacht.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:

Fig. 1      eine Anordnung zum Drahtschneiden einschließlich eines Regelkreises nach der Erfindung;

Fig. 2      einen Verlauf der auf den Erodierdraht wirkenden Kräfte beim Nachschneiden als Funktion des Arbeitsspaltes;

Fig. 3a,b      eine ausgelenkte Drahtelektrode im Querschnitt beim Nachschneiden eines geraden Profils (Fig. 3a) und eines krummen Profils (Fig. 3b); und

Fig. 4      eine ausgelenkte Drahtelektrode im Querschnitt beim Nachschneiden von Formfehlern.

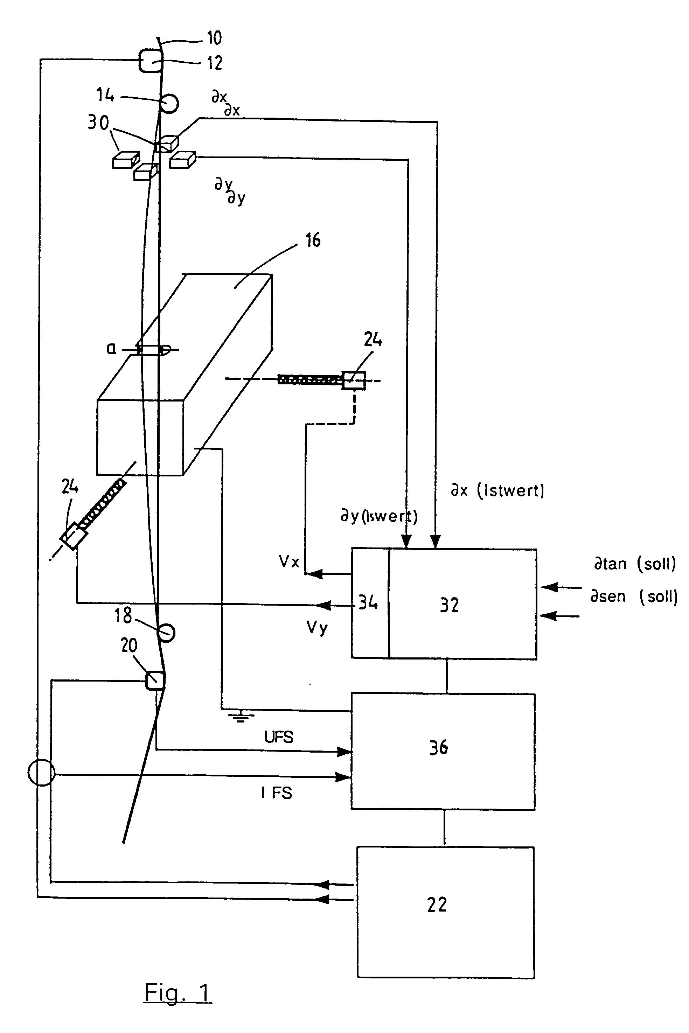

Fig. 1 beschränkt sich auf eine rein schematische Darstellung der wesentlichen - zum Verständnis der Erfindung erforderlichen - Teile einer Drahterosionsvorrichtung. Grundelemente wie Maschinengestell, Antriebe, Drahtversorgungssystem und Spülsystem sind nicht dargestellt, da sie als selbstverständlich vorausgesetzt werden.

In Fig. 1 wird ein Erodierdraht 10 von einer ersten (hier nicht dargestellten) Drahtspule in bekannter Weise unter Zugspannung abgewickelt, läuft an einer Stromzuführungseinheit 12 und einer oberen Drahtführung 14 vorbei, durchläuft die Bearbeitungszone im Werkstück 16 und wird über eine untere Drahtführung 18, vorbei an einer weiteren Stromzuführungseinheit 20 von einer (hier nicht dargestellten) Drahtziehvorrichtung gezogen. In der Bearbeitungszone wird das Werkstück 16 von einem Dielektrikum, welches beim Drahterodieren in der Regel aus aufbereitetem Wasser besteht, umspült. Zwischen dem Werkstück 16 und dem Erodierdraht 10 werden über die Stromzuführungseinheiten 12 und 20 die von einem Generator 22 gelieferten Bearbeitungsimpulse $I_{FS}$, $U_{FS}$ angelegt.

Die Drahtführungen 14 und 18 dienen dazu, den Erodierdraht 10 in einer definierten Lage gegenüber dem Werkstück 16 zu halten. Das Werkstück 16 ist auf einem Bearbeitungstisch aufgespannt, der - wie in Fig. 1 schematisch angedeutet - mit einem einen X/Y-Antrieb 24 ausgestattet ist, um eine Vorschubbewegung des Erodierdrahtes 10 in X/Y-Hauptachsenrichtung relativ zum Werkstück 16 entsprechend der gewollten Schnittkontur zu erzeugen.

Trotz größtmöglicher aufgebrachter Zugspannung auf den Erodierdraht 10 wird dieser aufgrund der während des Bearbeitungsvorganges auftretenden elektrischen und mechanischen Kräfte aus seiner Ruhelage R (hier mit fetter Linie gezeichnet) in der angedeuteten Weise um den Betrag a ausgelenkt. Diese Auslenkung wird nach Betrag und Richtung mit Hilfe eines Drahtlagesensors 30 erfaßt, der in der Nähe der oberen Drahtführung 14 angeordnet ist. Derartige Drahtlagesensoren sind von Firma AGIE bekannt und z.B. in der DE-PS 28 26 270 C2 oder EP 0 312 056 B1 beschrieben. Vorteilhaft kann auch bereits vorhandene Software für den Betrieb derartiger Drahtlagesenoren einfach übernommen und höchstens um einige wenige Routinen ergänzt werden.

Der in Fig. 1 dargestellte Drahtlagesensor 30 besteht aus vier unterschiedlichen Meßzellen, die jeweils paarweise sich gegenüberliegend um den Erodierdraht 10 herum angeordnet sind und die Komponenten $\partial x$ bzw. $\partial y$ der Drahtauslenkung in X/Y-Hauptachsenrichtung zu jedem Zeitpunkt vermessen.

Nach dem erfindungsgemäßen Verfahren wird die Auslenkung des Erodierdrahtes während der Bearbeitung auf einem vorgegebenen Wert konstant gehalten. Als Regelgröße zur Beeinflussung der Drahtauslenkung wird vorzugsweise die Vorschubgeschwindigkeit des X/Y-Antriebes 24, die Impulsfrequenz der Bearbeitungsimpulse oder diese beiden Erosionsparameter in Kombination miteinander gewählt.

Über den Drahtlagesensor 30 werden die Istwerte der Komponenten $\partial x$ (Istwert) und $\partial y$ (Istwert) der Drahtauslenkung in X/Y-Richtung laufend erfaßt, damit auch etwaige Schwankungen der Drahtauslenkung detektiert, und über eine geeignete Meßschaltung einem Steuerungsrechner 32 übermittelt. Da hier die Messung der Drahtauslenkung gegenüber den festen X/Y-Hauptachsen erfolgt, werden die Komponenten $\partial x$, $\partial y$ zunächst durch eine Koordinatentransformation in die Komponenten $\partial tan$, $\partial sen$ - jeweils tangential bzw. senkrecht zur Schnittrichtung - umgewandelt und dann mit einer vorgegebenen Sollauslenkung $\partial tan$ (soll), $\partial sen$

(soll) - jeweils tangential bzw. senkrecht zur Schnittrichtung - verglichen.

Im Falle einer Abweichung (Regeldifferenz) von der vorgegebenen Sollauslenkung erzeugt ein dem Steuerungsrechner 32 nachgeschalteter Stellgrößengeber 34 die Stellgrößen Vx, Vy für die Stellmotoren des X/Y-Antriebes 24. Die Stellgrößen Vx, Vy sind dabei derart, daß durch Änderung der Vorschubgeschwindigkeit des X/Y-Antriebes 24 einer Abweichung von der vorgegebenen Sollauslenkung entgegengewirkt wird. Alternativ dazu, oder in Kombination damit, wird obige Regeldifferenz einer dem Steuerungsrechner 32 nachgeschalteten Generatorsteuerung 36 übermittelt. Durch Einwirkung der Generatorsteuerung 36 wird die Impulsfrequenz der Bearbeitungsimpulse des Generators 22 derart geändert, daß die Abweichung der Ist-Drahtauslenkung von der Soll-Drahtauslenkung kompensiet wird.

Je nach Schnittart und Bearbeitungsstrom wird die Drahtauslenkung - sowohl tangential, als auch senkrecht zur Schnittbahn - auf den vorgegebenen Wert $\partial \tan$ (soll) bzw. $\partial \text{sen}$ (soll) geregelt. Bei der Ermittlung obiger Stellgrößen zur Beeinflussung der Drahtauslenkung kann die jeweilige Abweichung der Komponenten $\partial \tan$ bzw. $\partial \text{sen}$ von der entsprechenden Sollauslenkung unterschiedlich gewichtet und demnach die tangentiale und die senkrechte Komponente der geregelten Drahtauslenkung verschieden sein. Der Betrag A der Abweichung kann wie folgt um die Koeffizienten ktan und ksen für die Auslenkung tangential bzw. senkrecht zur Schnittbahn gewichtet werden:

$$A = (ktan * (\partial \tan)^2 + ksen * (\partial \text{sen})^2 )^{1/2}$$

Die Wahl der Koeffizienten ktan und ksen ist von dem gewünschten Ergebnis, insbesondere der gewünschten Schnittgenauigkeit, abhängig. Möchte man beispielsweise beim Nachschneiden die Drahtauslenkung quer zur Schnittrichtung möglichst klein halten, dann ist ksen > ktan zu wählen.

Die Generatorsteuerung 36 in Fig. 1 enthält ferner eine gegenüber der Regelung der Drahtauslenkung schnelleren innere Regelschleife zur Regelung der Strom- und Spannungswerte $I_{Fs}$, $U_{Fs}$ der Bearbeitungsimpulse, um den Erosionsprozeß auf etwaige Entartungen hin zu überwachen.

Je nach Schnittart wird die Erosionsvorrichtung in Fig. 1 wie folgt betrieben:

Im Ruhezustand, also vor dem eigentlichen Erosionsvorgang, ohne Spüldruck und bei stillstehendem Erodierdraht, befindet sich der Draht 10 in seiner Ruhelage. Selbst in der Ruhelage ist der Erodierdraht 10 wegen seiner Biegesteifigkeit und wegen der Richtungsänderung an den Drahtführungen 16, 18 nicht in der idealen neutralen Nullage ausgerichtet. Dennoch eignet sich die Ruhelage des Erodierdrahtes 10 für die Durchführung einer automatischen Eichung. Vor jedem Bearbeitungsvorgang wird die Ruhelage des Erodierdrahtes 10 automatisch mit Hilfe des Drahtlagesensors 30 gemessen und als Referenzwert für die spätere Regelung der Drahtauslenkung im Steuerungrechner 32 gespeichert. Als weiterer Referenzwert kann diejenige Drahtlage erfaßt werden, bei welcher der Draht ohne Strombelastung z.B. in eine Startposition fährt und die Spülung eingeschaltet ist. Die Drahtlage wird hier ebenfalls von der Biegesteifigkeit des Erodierdrahtes 10 bestimmt, außerdem von etwaigen Drahtschwingungen, deren Eigenfrequenz im Wasser-Dielelektrikum in der Regel um etwa einen Faktor 50 tiefer als die Impulsfrequenz der Bearbeitungsimpulse ist, sowie von der Spülung.

Während der Erosion wird die Drahtauslegung des Erodierdrahtes 10 durch den Einfluß unterschiedlicher elektrischer und mechanischer Kräfte bestimmt, die je nach Schnittart mehr oder weniger stark auftreten. Beim Vollschnitt ist der durch den Erosionsabtrag selbst verursachte Erosionsdruck maßgebend und der Erodierdraht 10 wird vorwiegend entgegen der Schnittrichtung vom Werkstück 16 weg ausgelenkt. In diesem Falle wird die Drahterosionsvorrichtung vorzugsweise mit hohen Bearbeitungsströmen und hohen Impulsfrequenzen betrieben; etwaigen Schwankungen der Drahtauslenkung wird durch Erhöhung der Vorschubgeschwindigkeit des X/Y-Antriebes 24 bei zunehmender Drahtauslenkung oder durch Verringerung der Vorschubgeschwindigkeit des X/Y-Antriebes 24 bei abnehmender Drahtauslenkung entgegengewirkt.

Bei Nachschnitten zur Korrektur von größeren Geometriefehlern (sog. Korrekturschnitte) sind die Verhältnisse ähnlich wie bei Vollschnitten. Bei Nachschnitten für feine Oberflächen (sog. Feinschnitte) überwiegen die elektrostatischen Kräfte, welche den Erodierdraht 10 gegen das Werkstück 16 drücken. Beide Drahtauslenkungen, ob zum Werkstück 16 hin oder von diesem weg, werden erfindungsgemäß während des Bearbeitungsvorganges konstant gehalten.

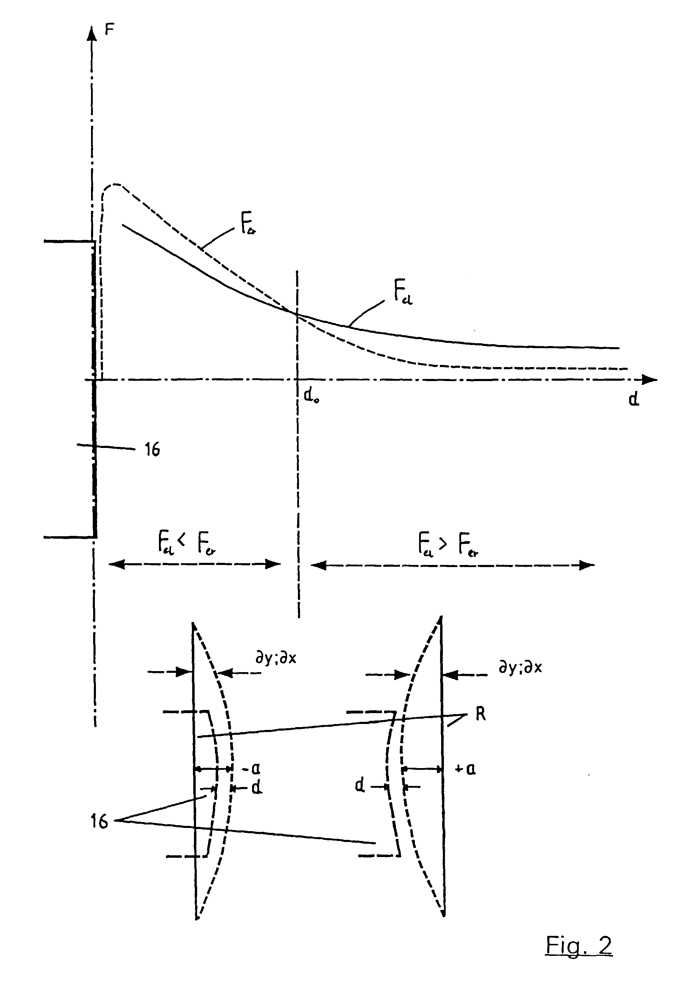

Zur Erläuterung der beim Nachschneiden auf den Erodierdraht wirkenden Kräfte und der damit einhergehenden Drahtauslenkung wird auf das Diagramm in Fig. 2 verwiesen. Darin ist der Verlauf der elektrostatischen Kräfte $F_{el}$ - in durchgezogener Linie - und der durch den Erosionsprozeß hervorgerufenen Erosionskräfte $F_{er}$ (bzw. Erosionsdruck) in Abhängigkeit des Abstandes d zwischen dem Werkstück 16 und dem Erodierdraht 10 aufgetragen. Dabei ist zu beachten, daß die Erosionskräfte $F_{er}$ in eine "negative" Richtung (quer zur Schnittrichtung) vom Werkstück 16 weg weist, wohingegen die elektrostatische Kräfte $F_{el}$ "positiv" zum Werkstück hin gerichtet ist. Der dargestellte Kräfteverlauf zeigt, daß die elektrostatischen Kräfte $F_{el}$ mit zunehmendem Abstand im wesentlichen reziprok zum Abstand d abnimmt. Im Vergleich dazu verläuft die Abnahme die Erosionskräfte $F_{er}$ etwas steiler. In einem Abstand $d_0$ heben sich die elektrostatischen Kräfte $F_{el}$ und die Erosionskräfte $F_{er}$ gerade auf, nämlich dort, wo sich die hier gezeigte gestrichelte Linie und die durchgezogene Linie schneiden. Unter Vernachlässigung der anderen während des Nachschneidevorganges wirkenen mechanischen und elektrischen Kräfte hat die Drahtauslenkung in diesem Fall den Wert "Null". Mit anderen Worten befindet sich der Erodierdraht 10 hier in seiner Ruhelage R, die er auch vor Beginn des Erosionsvorganges einnimmt. Für Abstände $d < d_0$ überwiegen die elektrostatischen Kräfte $F_{el}$, so daß der Draht eine positive Auslenkung +a vom Werkstück 16 weg erfährt. Für Abstände $d > d_0$ dominieren die elektrostatischen Kräfte $F_{el}$, so daß die Drahtauslenkung einen negativen Wert -a hat und zum Werkstück 16 hin gedrückt wird.

Je nach Schnittyp, ob geradlinig oder kurvenförmig, ob Korrektur- oder Feinschnitt, und je nach Drahtgeometrie, Drahtsorte und der angestrebten Bearbeitungsleistung überwiegen nach diesem Modell entweder die elektrostatischen Kräfte $F_{el}$ oder die durch den Erosionsabtrag verursachten Erosionskräfte $F_{er}$. Entsprechend ist auch eine positive oder eine negative Drahtauslenkung als Sollwert für das vorliegende Verfahren zu wählen.

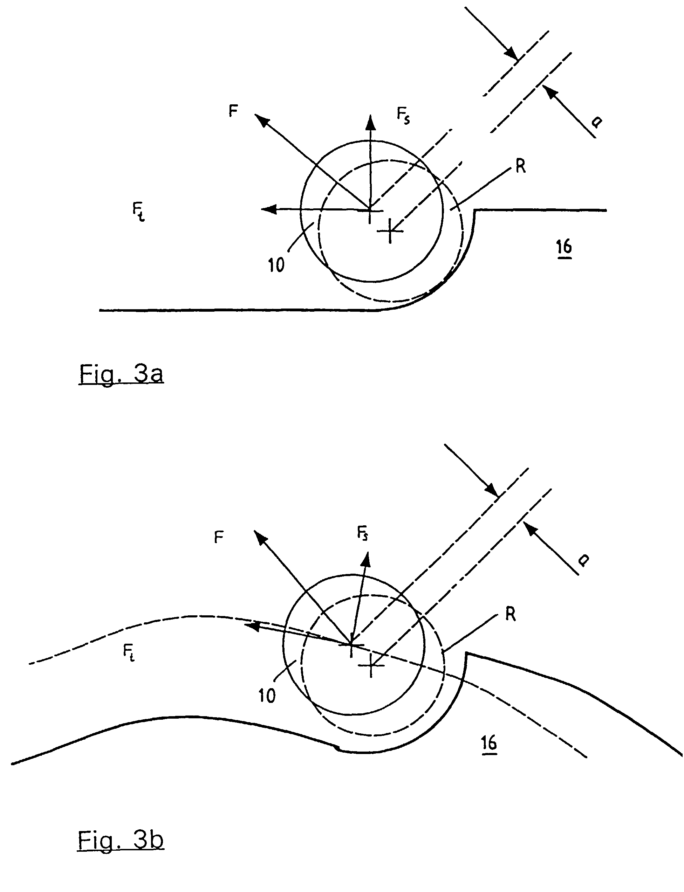

In den Figuren 3a und 3b ist der Erodierdraht 10 stark vergrößert im Querschnitt dargestellt, und zwar beim Nachschneiden einer geraden Kontur (Fig. 3a) sowie einer gekrümmten Kontur (Fig. 3b). Die gestrichelten Umrisse deuten dabei jeweils die Ruhelage R des Erodierdrahtes 10 an, die durchgezogenen Umrisse jeweils dessen Lage unter Einwirkung der durch den Bearbeitungsvorgang auf den Erodierdraht 10 ausgeübten Kräfte. Diese setzen sich jeweils zusammen aus einer Komponente $F_t$ tangential zur Schnitt- bzw. Vorschubrichtung und einer Kraft $F_s$ senkrecht zur Schnittrichtung. Der Erodierdraht 10 wird jeweils um den Betrag a aus seiner Ruhelage R ausgelenkt. Die Komponenten $\partial x$, $\partial y$ der Drahtauslenkung in X/Y-Hauptachsenrichtung werden anhand des in Fig. 1 dargestellten Drahtlagesensors 30 ständig vermessen und im dortigen Regelkreis auf eine etwaige Abweichung von einer vorgegebenen Sollauslenkung hin überprüft und gegebenenfalls kompensiert.

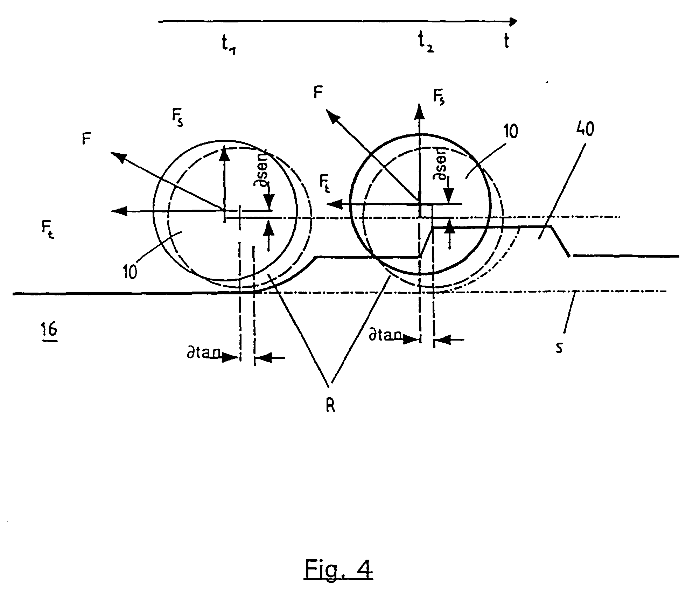

Fig. 4 zeigt schematisch die Auslenkung des Erodierdrahtes 10 während eines Nachschneidevorganges zur Korrektur von Formfehlern in zeitlich aufeinanderfolgenden Zuständen tl und t2. Auch hier ist der Erodierdraht 10 stark vergrößert im Querschnitt dargestellt. Die gestrichelten Umrisse deuten jeweils die Ruhelage R des Erodierdrahtes 10 an, die ausgezogenen Umrisse dessen Lage unter Belastung durch die Bearbeitungskräfte. Wiederum bezeichnet F die auf den Erodierdraht 10 während der Bearbeitung wirkende Auslenkungskraft, die sich aus einer zur Schnittrichtung senkrechten Komponente $F_s$ und einer zur Schnittrichtung tangentialen Komponente $F_t$ zusammensetzt. Diese Komponenten führen jeweils zu einer Auslenkungskomponente senkrecht zur Schnittrichtung ($\partial sen$) und einer Auslenkungskomponente tangential zur Schnittrichtung ($\partial tan$).

Zu dem Zeitpunkt t1 befindet sich der Erodierdraht 10 mit der in Fig. 4 angedeuteten Drahtauslenkung in einem Abstand von der Werkstücksoberfläche. Mit zunehmenden Fortschreiten des Erodierdrahtes 10 entlang der Werkstückskontur ändert sich auch der Betrag und die Richtung der auf den Erodierdraht 10 wirkenden Gesamtkraft F aufgrund der veränderlichen Oberflächentopographie 40. Dies hat zwangsläufig auch eine Änderung der Drahtauslenkung zur Folge. Nach der vorliegenden Ausführung der Erfindung wird jedoch einer solchen Änderung der Drahtauslenkung durch Beeinflussung der Vorschubgeschwindigkeit, hier durch Reduzierung der Vorschubgeschwindigkeit der x/y-Bewegung dahingehend entgegengewirkt, daß der Betrag und die Richtung der Auslenkung tangential und senkrecht zur Schnittrichtung konstant bleiben. In Fig. 4 entsprechen daher die Werte der Auslenkungskomponenten $\partial tan$ und $\partial sen$ im Zustand t2 denjenigen der Auslenkungskomponenten $\partial tan$ und $\partial sen$ im Zustand t1.

**Patentansprüche**

1. Verfahren zum Drahterodieren unter Berücksichtigung der durch den Bearbeitungsvorgang verursachten Auslenkung eines Erodierdrahtes, wobei wenigstens ein Erosionsparameter, z.B. Impulsfrequenz, Vorschubgeschwindigkeit, Impulsstrom, Impulsdauer und/oder Spülparameter, der eine die Drahtauslenkung beeinflussende Querkraft auf den Erodierdraht verursacht, zur Korrektur der Drahtauslenkung verändert wird, wobei hierfür die Drahtauslenkung (a) kontinuierlich gemessen und in Abhängigkeit des wenigstens einen Erosionsparameters so geregelt wird, daß die Drahtauslenkung (a) des Erodierdrahtes (10) während der Bearbeitung konstant gehalten wird.

2. Verfahren nach Anspruch 1, durch gekennzeichnet, daß eine programmierte Schnittkontur anhand der Drahtauslenkung (a) derart korrigiert wird, daß sich der Erodierdraht (10) auf einer vorgeschriebenen Sollschnittbahn (s) bewegt.

3. Verfahren nach Anspruch 1 oder 2, dadurch gekennzeichnet, daß als Erosionsparameter die Impulsfrequenz der Bearbeitungsimpulse und/oder die Vorschubgeschwindigkeit (Vx, Vy) des Erodierdrahtes (10) gewählt wird/werden.

4. Verfahren nach Anspruch 3, dadurch gekennzeichnet, daß die Drahtauslenkung (a) geregelt wird:

   a) bei vorgegebener Impulsfrequenz in Abhängigkeit der Vorschubgeschwindigkeit (Vx, Vy);
   b) bei vorgegebener Vorschubgeschwindigkeit (Vx, Vy) in Abhängigkeit der Impulsfrequenz;

oder

c) in Abhängigkeit der Impulsfrequenz und der Vorschubgeschwindigkeit (Vx, Vy).

5. Verfahren nach einem der vorstehenden Ansprüche, dadurch gekennzeichnet, daß die Erosionsparameter derart geregelt werden, daß die Auslenkung (a) je nach Schnittart und/oder Bearbeitungsstrom einen vorgegebenen Wert - sowohl tangential (∂tan) als auch senkrecht (∂sen) zur Schnittbahn - hat.

6. Verfahren nach Anspruch 5, dadurch gekennzeichnet, daß die Richtung der Sollauslenkung wie folgt gewählt wird:

a) gegen die Schnittrichtung bei geradem Vollschnitt;
b) mit einer tangentialen (∂tan (soll)) Komponente und einer senkrechten Komponente (∂sen (soll)) relativ zur Schnittrichtung bei kurvenförmigem Vollschnitt; oder
c) quer zur Schnittrichtung bei Feinschnitten.

7. Verfahren nach einem der vorstehenden Ansprüche, dadurch gekennzeichnet, daß bei Unterschreiten eines vorgegebenen Mindestwertes der Drahtauslenkung (a) automatisch Maßnahmen zur Verhinderung von Prozeßentartungen eingeleitet werden, insbesondere Maßnahmen zur Verhinderung eines von Kurzschlusses oder eines Drahtrisses.

8. Verfahren nach einem der vorstehenden Ansprüche, dadurch gekennzeichnet, daß die Ruhelage (R) des Erodierdrahtes (10) vor Beginn jeder Bearbeitung gemessen und als Referenzwert für die Drahtauslenkung (a) gespeichert wird.

9. Verfahren nach einem der vorstehenden Ansprüche, dadurch gekennzeichnet, daß der Arbeitsspaltwiderstand ständig überwacht und etwaige Abweichungen von einem Sollwert durch Erhöhung des Spüldruckes kompensiert werden.

10. Verfahren nach einem der vorstehenden Ansprüche, dadurch gekennzeichnet, daß der Bearbeitungsvorgang zusätzlich - durch eine gegenüber der Regelung der Drahtauslenkung schnellere innere Regelschleife - anhand der Zündverzögerung, der mittleren Bearbeitungsspannung, der Anzahl der Leerlaufimpulse und/oder der Kurzschlußbildung überwacht wird.

11. Regelkreis für eine Drahterosionsvorrichtung, insbesondere zur Durchführung eines Verfahrens nach einem der vorstehenden Ansprüche, mit:

a) wenigstens einem Drahtlagesensor (30) zur kontinuierlichen Erfassung der Drahtauslenkung (a) eines Erodierdrahtes (10); und
b) einem Regler (32, 34, 36) zum Verändern wenigstens eines Erosionsparameters, z.B. Impulsfrequenz, Vorschubgeschwindigkeit, Impulsstrom, Impulsdauer und/oder Spülparameter, wodurch eine die Drahtauslenkung (a) beeinflussende Querkraft auf den Erodierdraht ausgeübt wird, derart, daß die Drahtauslenkung (a) während der Bearbeitung konstant gehalten wird.

12. Regelkreis nach Anspruch 11, dadurch gekennzeichnet, daß der Regler einen Vergleicher (32) und einen Stellgrößengeber (34; 36) aufweist, welcher in Abhängigkeit der Regeldifferenz auf die Impulsfrequenz der Bearbeitungsimpulse und/oder auf die Vorschubgeschwindigkeit (Vx, Vy) des Erodierdrahtes (10) einwirkt.

13. Regelkreis nach Anspruch 11 oder 12, gekennzeichnet durch einen Speicher zum Empfang der Signale aus dem Drahtlagesensor (30) und Speicherung der Erodierdrahtlage in der Ruhelage (R) vor Beginn des Bearbeitungsvorganges.

**Claims**

1. A process for wire electric discharge machining taking into consideration the deflection of an erosion wire that is caused by the machining operation, whereby at least one erosion parameter, e.g. pulse frequency, feed velocity, pulse current, pulse duration and/or rinsing parameter, which causes a transverse force that influences the wire deflection on the erosion wire, is changed to correct the wire deflection, whereby for this the wire deflection (a) is continuously measured and is controlled in dependence on the at least one erosion parameter so that the wire deflection (a) of the erosion wire (10) is kept constant during machining.

2. A process according to Claim 1,
**characterised in that** a programmed cut contour is corrected by means of the wire deflection (a) in such a manner that the erosion wire (10) moves on a prescribed set cutting path (s).

3. A process according to Claim 1 or 2,
**characterised in that** the pulse frequency of the machining pulses and/or the feed velocity (Vx, Vy) of the erosion wire (10) is/are chosen as the erosion parameters.

4. A process according to Claim 3,
**characterised in that** the wire deflection (a) is controlled:

a) at predetermined pulse frequency in dependence on the feed velocity (Vx, Vy);
b) at predetermined feed velocity (Vx, Vy) in dependence on the pulse frequency; or
c) in dependence on the pulse frequency and the feed velocity (Vx, Vy).

5. A process according to one of the preceding Claims,
**characterised in that** the erosion parameters are controlled in such a manner that the deflection (a) has a predetermined value - both tangentially (δtan) and also perpendicularly (δsen) to the cutting path - depending on the type of cut and/or machining current.

6. A process according to Claim 5,
**characterised in that** the direction of the set deflection is chosen as follows:

a) against the cutting direction in the case of a straight full cut;
b) with a tangential component (δtan (set)) and a perpendicular component (δsen (set)) in relation to the cutting direction in the case of a curved full cut; or
c) at right angles to the cutting direction in the case of precision cuts.

7. A process according to one of the preceding Claims,
**characterised in that** if a predetermined minimum value for the wire deflection (a) is not reached, measures to prevent operational degeneration are automatically initiated, in particular measures to prevent a short circuit or a wire fracture.

8. A process according to one of the preceding Claims,
**characterised in that** the position of rest (R) of the erosion wire (10) is measured before the start of each machining operation and is stored as a reference value for the wire deflection (a).

9. A process according to one of the preceding Claims,
**characterised in that** the working gap resistance is continuously monitored and any deviations from a set value are compensated by increasing the rinsing pressure.

10. A process according to one of the preceding Claims,
**characterised in that** the machining operation is additionally monitored - by an internal control loop that is faster than the control of the wire deflection - by means of the ignition delay, the mean machining voltage, the number of the no-load pulses and/ or the short circuit formation.

11. A closed-loop control circuit for a wire electric discharge machining device, in particular for performing a process in accordance with one of the preceding Claims, with

a) at least one wire position sensor (30) for continuously recording the wire deflection (a) of an erosion wire (10); and
b) a controller (32, 34, 36) for changing at least one erosion parameter, e.g. pulse frequency, feed velocity, pulse current, pulse duration and/ or rinsing parameters, by which a transverse force influencing the wire deflection (a) is exerted on the erosion wire in such a manner that the wire deflection (a) is kept constant during machining.

12. A closed-loop control circuit according to Claim 11,
**characterised in that** the controller comprises a comparator (32) and a control variable generator (34; 36), which in dependence on the deviation acts on the pulse frequency of the machining pulses and/ or on the feed velocity (Vx, Vy) of the erosion wire (10).

13. A closed-loop control circuit according to Claim 11 or 12,
**characterised by** a memory for receiving the signals from the wire position sensor (30) and storing the erosion wire position in the position of rest (R) before the start of the machining operation.

## Revendications

1. Procédé d'étincelage par fil, qui prend en compte la déviation d'un fil d'étincelage produite par le processus d'usinage, selon lequel au moins un paramètre d'étincelage par exemple la fréquence des impulsions, la vitesse d'avance, le courant d'impulsions, la durée des impulsions et/ou le paramètre de balayage, qui provoque l'application au fil d'étincelage d'une force transversale, qui influe sur la déviation du fil, est modifié pour corriger la déviation du fil, et selon lequel on mesure à cet effet d'une manière continue la déviation (a) du fil et la règle en fonction d'au moins un paramètre d'étincelage de telle sorte que la déviation (a) du fil d'étincelage (10) est maintenue constante pendant l'usinage.

2. Procédé selon la revendication 1, caractérisé en ce qu'un profil de coupe programmé est corrigé sur la base de la déviation (a) du fil de telle sorte que le fil d'étincelage (10) se déplace sur une trajectoire de coupe de consigne(s) prescrite.

**3.** Procédé selon la revendication 1 ou 2, caractérisé en ce qu'on choisit, comme paramètre(s) d'étincelage, la fréquence des impulsions d'usinage et/ou la vitesse d'avance (Vx, Vy) du fil d'étincelage (10).

**4.** Procédé selon la revendication 3, caractérisé en ce que la déviation (a) du fil est réglée :

a) pour une fréquence prédéterminée d'impulsions, en fonction de la vitesse d'avance (Vx, Vy) ;

b) pour une vitesse d'avance (Vx, Vy) prédéterminée, en fonction de la fréquence des impulsions ; ou

c) en fonction de la fréquence des impulsions et de la vitesse d'avance (Vx, Vy).

**5.** Procédé selon l'une des revendications précédentes, caractérisé en ce qu'on règle les paramètres d'étincelage de telle sorte que la déviation (a) possède, en fonction du type de coupe et/ou du courant d'usinage, une valeur prédéterminée - aussi bien tangentiellement ($\partial$tan) que perpendiculairement ($\partial$sen) au plan de coupe.

**6.** Procédé selon la revendication 5, caractérisé en ce que la direction de la déviation de consigne est choisie de la manière suivante:

a) par rapport à la direction de coupe pour une coupe complète rectiligne ;

b) avec une composante tangentielle ($\partial$tan) (de consigne) et avec une composante perpendiculaire ($\partial$sen) (de consigne) par rapport à la direction de coupe dans le cas d'une coupe complète selon une forme courbe ; et

c) transversalement par rapport à la direction de coupe dans le cas de coupes précises.

**7.** Procédé selon l'une des revendications précédentes, caractérisé en ce que, dans le cas où la déviation (a) du fil tombe au-dessous d'une valeur minimale prédéterminée, des dispositions sont déclenchées automatiquement pour empêcher la dégénérescence du procédé, notamment des dispositions visant à empêcher l'un d'un court-circuit ou d'une rupture du fil.

**8.** Procédé selon l'une des revendications précédentes, caractérisé en ce que la position de repos (R) du fil d'étincelage (10) est mesurée avant le début de chaque usinage et est mémorisée en tant que valeur de référence pour la déviation (a) du fil.

**9.** Procédé selon l'une des revendications précédentes, caractérisé en ce que la résistance dont la fente de travail est contrôlée en permanence et que d'éventuels écarts par rapport à une valeur de consigne sont compensés par un accroissement de la pression de balayage.

**10.** Procédé selon l'une des revendications précédentes, caractérisé en ce que le processus d'usinage est contrôlé en outre - par une boucle intérieure de régulation, qui est plus rapide que la régulation de la déviation du fil - sur la base du retard d'amorçage, de la tension moyenne d'usinage, du nombre des impulsions à vide et/ou de la formation d'un court-circuit.

**11.** Circuit de régulation pour un dispositif d'étincelage par fil, notamment pour la mise en oeuvre d'un procédé selon l'une des revendications précédentes, comportant :

a) au moins un capteur (30) de la position du fil pour détecter en continu la déviation (a) du fil d'étincelage (10) ; et

b) un régulateur (32, 34, 36) servant à modifier au moins un paramètre d'étincelage, par exemple la fréquence d'impulsions, la vitesse d'avance, le courant d'impulsions, la durée des impulsions et/ou des paramètres de balayage, ce qui a pour effet qu'une force transversale influençant la déviation (a) du fil est appliquée au fil d'étincelage de telle sorte que la déviation (a) du fil est maintenue constante pendant l'usinage.

**12.** Circuit de régulation selon la revendication 11, caractérisé en ce que le régulateur comporte un comparateur (32) et un générateur de grandeur de réglage (34 ; 36), qui, en fonction de la différence de régulation, agit sur la fréquence des impulsions d'usinage et/ou sur la vitesse d'avance (Vx, Vy) du fil d'étincelage (10).

**13.** Circuit de régulation selon la revendication 11 ou 12, caractérisé par une mémoire servant à recevoir les signaux délivrés par le capteur (30) de la position du fil et pour mémoriser la position du fil d'étincelage dans la position de repos (R) avant le début du processus d'usinage.

Fig. 1

Fig. 2

Fig. 3a

Fig. 3b

Fig. 4